# EUROPEAN PATENT APPLICATION

(11) **EP 2 625 944 A1**
(43) Date of publication of application: **14.08.2013**
(21) Application number: 13154189.8
(22) Date of filing: 06.02.2013
(51) Int. Cl.: A01B 61/04, F16F 1/54

(54) **Attachment with rubber safety device for tillage tool**

(30) Priority: 08.02.2012 ES 201230181
(71) Applicant: Ovlac Fabricacion de Maquinaria Agricola, S.A., 34200 Palencia (ES)
(72) Inventor: Calvo Pérez, Heliodoro, 34200 PALENCIA (ES)
(74) Representative: Ungria López, Javier

(57) **Abstract**

It is envisaged to affix an arm (1) of the tillage tool to a frame (2) by means of two V-shaped plates (3) connected to one another to retain the frame (2), in a turned position with respect to the V-shaped plates (3), in their interior, by means of the interposition of rubber bodies (4) compressed and located in the areas comprised between the interior of the V-shaped plates (3) and the exterior of the frame (2). The novelty of the invention is centered in characteristic axial retention means of the rubber bodies (4) to maintain the same in a static position at least in both directions of its longitudinal direction.

## Description

### OBJECT OF THE INVENTION

The present invention, as expressed in the wording of this specification, relates to an attachment with rubber safety device for tillage tool, where the safety device based on rubber bodies is applied to tillage tools in such a way that the attachment of the invention is an improvement of the utility model under application number 200601326 in Spain.

In principle, the attachment is turned with respect to the frame to interpose the compressed rubber bodies in the free areas between the interior of the attachment and the exterior of the frame, the rubber bodies maintaining the attachment, and in consequence the arm, in a balanced position with respect the frame when no forces are applied to the arm and allowing the tilting of the attachment when forces are applied to the arm, whose ceasing causes the return of the arm to the balanced position.

It has positioning means of the attachment in a forced position predetermined with respect to the frame when no forces are applied to the arm in the balanced position, in order to provide the arm with an initial preload that facilitates its return to the forced predetermined position.

Based on this premise, the object of the invention is to provide characteristic axial retention means to prevent the axial displacements of the rubber bodies in both directions of the longitudinal direction of said rubber bodies.

### BACKGROUND OF THE INVENTION

The use of attachments of the tillage arms to a frame, known as chisel-type attachments, and consisting in mounting the arms on attachments, which in turn are mounted on a frame, is well known in the sector of agricultural machinery. These types of attachments generally have a spring-based safety system, by means of which the arm may be tilted by applying any external force, such as in the case where it runs into a rock nailed to the ground, thus compressing the spring, and when the force stops, the arm returns to its initial position by means of the spring.

These types of attachments with springs present the inconvenience that they require the greasing and/or substitution of the anti-friction elements, due to the frictions they suffer, aside from the noise caused by the displacement of the arms due to the aforementioned frictions.

On the other hand, it should be noted that the manufacturing of attachments in other types of implements, known as compact disc harrows, which are formed by discs mounted on a frame by means of attachments with a rubber safety system, for which the attachment comprises two V-shaped plates connected to one another on the frame in a turned position and by means of the interposition of rubber bodies compressed and located in the areas comprised between the interior of the V-shaped plates and the exterior of the frame, is known within the agricultural sector. This way, the attachment determines that the V-shaped plates are turned 45° with respect to the frame, which is the position wherein the rubbers are less compressed. In this case, when any external force is applied to the arm, the rubbers are compressed, causing the angular movement of the arm and the attachment, and when the force on the arm stops, it tends to return to the most stable position, corresponding to the aforementioned 45°.

This type of attachment is advantageous with respect to the previous one because it does not require the greasing or the substitution of bushings because there is no wear or friction of metal against metal, while avoiding the appearance of slack and providing a much more silent operation wherein the rubbers absorb vibrations at the same time, with which an attachment that is much more durable than the previous one is obtained.

The attachment applied to compact disc harrow implements has never been employed in chisel-type implements, besides, they present the inconvenience that, when carrying out broad lifting cycles on the arm, it does not return to the out of phase position of 45° in all arms, but each one of them remains located at different heights, which causes the arms not to sink into the soil with the same depth.

The aforementioned inconveniences are solved in principle with the utility model with the application number 200601326 in Spain, owned by the same holder of the present invention.

However, the stress to which the rubber bodies are subjected generates displacements in the axial direction of said rubber bodies, making them leave their location with the consequent evident problems said displacement causes, such as the malfunction of the tillage tool and the possible breakage of some of the elements, which have an effect on the temporary stoppage of the agricultural activity until the breakdown is repaired.

### DESCRIPTION OF THE INVENTION

With the purpose of achieving the objectives and avoiding the inconveniences mentioned in the previous sections, the invention proposes an attachment with rubber safety device for tillage tool.

The attachment comprises in principle two V-shaped plates connected to one another to retain a frame in a turned position with respect to the V-shaped plates in their interior, by means of the interposition of rubber bodies compressed and located in the areas comprised between the interior of the V-shaped plates and the exterior of the frame, so said rubber bodies press against the internal faces of the V-shaped plates and against the external faces of the frame to maintain the V-shaped plates in a balanced position with respect to the frame when no force is applied to the arm, and to allow the tilting of the V-shaped plates, and therefore, of the arm, when forces are applied to the arm.

The attachment is **characterized in that** it comprises axial retention means of the rubber bodies determined by terminal elements established in two extremities of said rubber bodies.

Said terminal elements make contact with the lateral edges of the V-shaped plates.

In one embodiment, the terminal elements are an integral part of the rubber bodies themselves, so in this particular case, said terminal elements comprise radial extensions in the form of cams that are an integral part of said rubber bodies.

In turn, said radial extensions are delimited by convex curved edges integrating flat frontal faces that make contact with the lateral edges of the V-shaped plates.

Next, in order to facilitate a better comprehension of this specification and forming an integral part thereof, a series of figures representing the object of the invention in an illustrative rather than limitative manner has been attached.

### BRIEF DESCRIPTION OF THE DRAWINGS

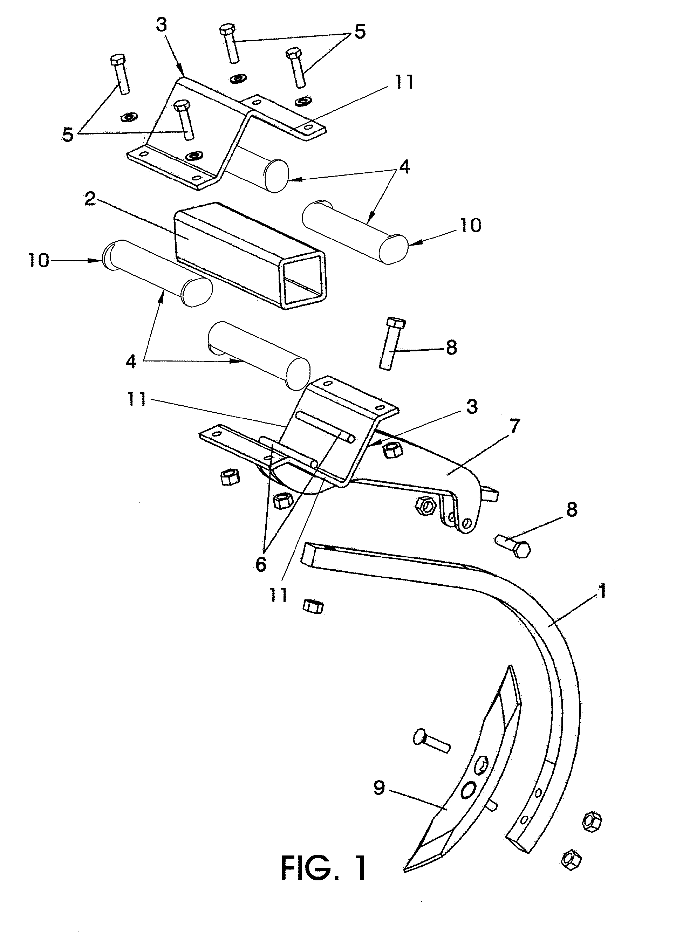

Figure 1.- Shows an exploded perspective view of the attachment with rubber safety device for tillage tool, object of the invention. Characteristic rubber bodies integrating axial retention elements materialized by radial extensions that form an integral part of said rubber bodies are highlighted.

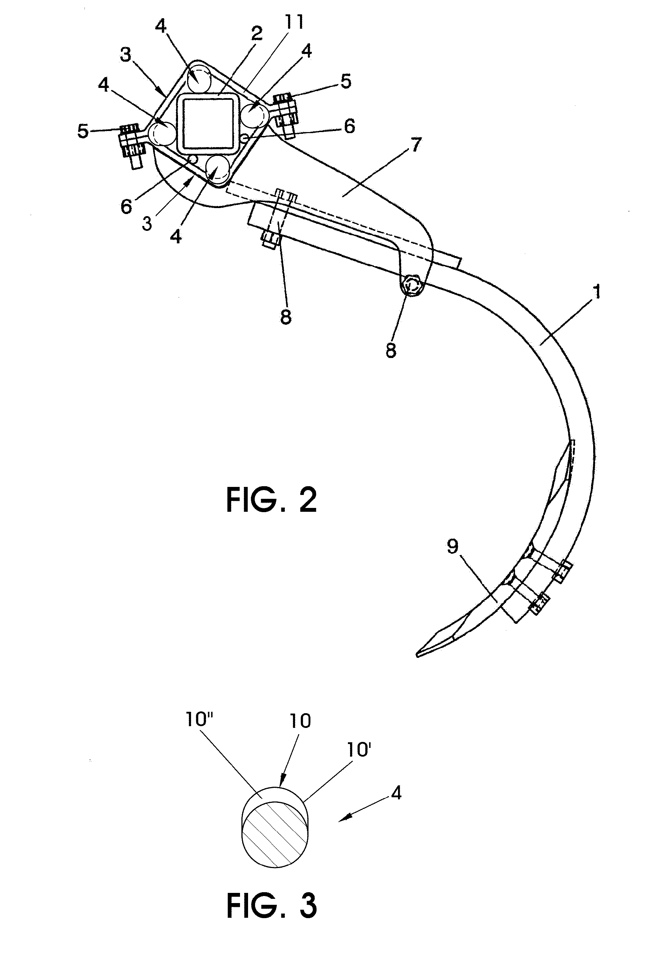

Figure 2.- Shows an elevational view of the attachment of the invention.
Figure 3.- Shows a sectioned view of a rubber body that integrates the aforementioned radial extensions.

### DESCRIPTION OF AN EXAMPLE OF AN EMBODIMENT OF THE INVENTION

Taking into account the numeration adopted in the figures, the attachment with rubber safety device for tillage tool contemplates the following nomenclature used in the description:
1. Arms.
2. Frame
3. V-shaped plates.
4. Rubber bodies.
5. Screws.
6. Rods.
7. Prolongation.
8. Screws.
9. Grid.
10. Radial extensions.
10'. Convex curved edges.
10". Flat frontal faces.
11. Lateral edges.

The attachment of the invention is envisaged to affix a series of arms 1 to a frame 2 of a tillage tool (not represented because it is not an object of the invention), for which V-shaped plates 3 are envisaged, arranged in an out of phase position on the frame to which they are affixed by means of screws 5, so the rubber bodies 4 that are compressed when the plates 3 are affixed are arranged in the spaces that remain comprised between the external faces of the frame and the internal faces of the plates 3.

The internal faces of one of the plates 3 comprises welded rods 6, which are arranged transversally in the internal faces of the plate 6, so when the plates 3 are affixed to one another by means of the screws 5, they remain in an initial forced position predetermined by the arrangement of the rods 6, with which said frame 2 makes contact, the rubber bodies 4 providing an initial preload to the arm 1. That is to say, without the arrangement of the rods 6, the frame 2 would remain centered and out of phase in 45° with respect to the plates 3, due to the pressure exerted by the rubber bodies 4, which is the position wherein the rubber bodies are less compressed, but in this case, the incorporation of the rods 6 provides a gap in the frame 2 with respect to the plates 3 other than 45°, due to which the rubber bodies 4 are forced in the initial stop position of the frame 2 against the rods 6, which provides the aforementioned preload in the initial position wherein no force is applied to the arm 1.

In order to carry out the affixing of the arm 1 to the plates 3, it has been envisaged that the lower plate 3 comprises a prolongation 7, wherein the arm 1 is affixed by means of screws 8 and the corresponding nuts. In addition, the corresponding grid 9 is affixed to the extremity of the arm 1.

With the description made, it can be easily understood that in the initial resting position of the tool, all the arms 1 are perfectly aligned in the position wherein the frame 2 makes contact with the rods 6.

When a force is applied to the arm 1 while it the arm is plowing, an upwardly directed tilting of the arm takes place, further compressing the rubber bodies 4, and when the force on the arm 1 stops, the compression suffered by the rubber bodies 4 forces the arm 1 to return to its initial position, wherein the frame 2 makes contact with the rods 6.

Providing the arm with an initial preload makes the arm increase the force in the entire path, thus achieving an optimal operation. In addition, the initial preload provides that, when the rubber bodies 4 are compressed to a greater extent, they provide greater force and increase the tendency to locate the arm 1 in the initial resting position wherein the frame 2 makes contact with the rods 6, thereby ensuring that the attachment always returns to the initial stop position.

Each one of the rubber bodies 4 comprises a cylindrical structure, in which extremities radial extensions 10 in the form of cams are defined, which are an integral part of said rubber bodies 4.

The radial extensions 10 delimited by a convex curved edge 10' constitute axial retention means to ensure the immobilization of the rubber bodies 4 in both directions of their longitudinal dimension.

To achieve the foregoing, flat frontal faces 10" of said radial extensions 10 make contact against lateral edges 11 of the V-shaped plates 3.

## Claims

1. - Attachment with rubber safety device for tillage tool, envisaged to affix an arm (1) of the tillage tool to a frame (2) by means of two V-shaped plates (3) connected to one another to retain the frame (2), in a turned position with respect to the V-shaped plates (3), in their interior, by means of the interposition of rubber bodies (4) compressed and located in the areas comprised between the interior of the V-shaped plates (3) and the exterior of the frame (2), so said rubber bodies (4) press against the internal faces of the V-shaped plates (3) and against the external faces of the frame (2) to maintain the V-shaped plates (3) in an initial balanced position with respect to the frame (2) when no force is applied to the arm, and to allow the tilting of the V-shaped plates (3), and therefore, the tilting of the arm (1), when forces are applied to the arm (1);
**characterized in that**:
it comprises axial retention means of the rubber bodies (4) determined by terminal elements arranged in the extremities of said rubber bodies (4);
- the terminal elements make contact against opposite lateral edges (11) of the V-shaped plates (3).

2. - Attachment with rubber safety device for tillage tool according to claim 1, **characterized in that** the terminal elements comprise radial extensions (10) in the form of cams which, through flat frontal faces (10"), make contact against the lateral edges (11) of the V-shaped plates (3).

3. - Attachment with rubber safety device for tillage tool, according to claim 2, **characterized in that** the radial extensions (10) are delimited by a convex curved edge (10').
